(19) Europäisches Patentamt
European Patent Office
Office européen des brevets

(11) EP 4 507 056 A1

(12) # EUROPEAN PATENT APPLICATION

published in accordance with Art. 153(4) EPC

(43) Date of publication:
**12.02.2025 Bulletin 2025/07**

(21) Application number: **23921864.7**

(22) Date of filing: **16.02.2023**

(51) International Patent Classification (IPC):
***H01M 10/0569*** *(2010.01)*

(52) Cooperative Patent Classification (CPC):
Y02E 60/10

(86) International application number:
**PCT/CN2023/076518**

(87) International publication number:
**WO 2024/168708 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **LITHIUM SECONDARY BATTERY AND ELECTRICAL APPARATUS**

(57) This application provides a lithium secondary battery and an electric apparatus. The lithium secondary battery includes: a negative electrode plate, where the negative electrode plate includes a negative electrode current collector and a negative electrode active material layer disposed on at least one side of the negative electrode current collector, and a porosity of the negative electrode active material layer is P; and an electrolyte, where the electrolyte includes a solvent, the solvent includes at least one of compounds represented by the following formula (I), and a mass fraction of the compound represented by formula (I) in the electrolyte is W1, W1 and P satisfying $0.65 \le W1/P \le 4.4$, and optionally $1.1 \le W1/P \le 3.5$;

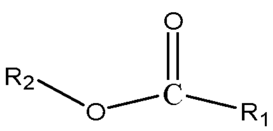

(I)

where $R_1$ and $R_2$ each independently include at least one of an alkyl group having 1 to 3 carbon atoms and a halogenated alkyl group having 1 to 3 carbon atoms. The lithium secondary battery can increase a transport rate of lithium ions in the negative electrode active material layer in a case of a low porosity of the negative electrode plate, thereby improving cycling performance and safety performance of the lithium secondary battery while increasing energy density of the lithium secondary battery.

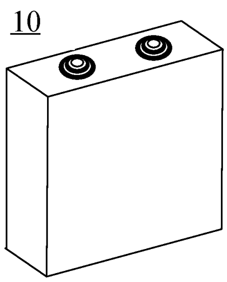


FIG. 1

EP 4 507 056 A1

## Description

### TECHNICAL FIELD

This application relates to the field of battery technologies, and in particular, to a lithium secondary battery and an electric apparatus.

### BACKGROUND

In recent years, lithium secondary batteries have been widely used in various electronic products and electric vehicles due to their high power density and volume specific capacity. However, with the great development and widespread application of lithium secondary batteries, higher requirements are imposed on their energy density, cycle life, and the like.

Increasing the powder compacted density of the negative electrode plate is a common way to increase the energy density of the lithium secondary battery. However, with the increase in the powder compacted density, the porosity of the negative electrode active material layer decreases, which affects transport of lithium ions in the negative electrode active material layer, and leads to problems such as lithium precipitation and gas generation at the negative electrode, severely affecting the cycling performance and safety of the lithium secondary battery. Therefore, how the cycling performance and safety performance of the lithium secondary battery are improved while increasing the energy density of the lithium secondary battery is an urgent technical problem to be solved.

### SUMMARY

This application is made in view of the foregoing technical problem and is intended to provide a lithium secondary battery and an electric apparatus. The lithium secondary battery can increase a transport rate of lithium ions in a negative electrode active material layer in a case of a low porosity of a negative electrode plate, thereby improving cycling performance and safety performance of the lithium secondary battery while increasing energy density of the lithium secondary battery.

According to a first aspect, this application provides a lithium secondary battery, including: a negative electrode plate, where the negative electrode plate includes a negative electrode current collector and a negative electrode active material layer disposed on at least one side of the negative electrode current collector, and a porosity of the negative electrode active material layer is P; and an electrolyte, where the electrolyte includes a solvent, the solvent includes at least one of compounds represented by the following formula (I), and a mass fraction of the compound represented by formula (I) in the solvent is W1, the mass fraction W1 of the compound represented by formula (I) and the porosity P of the negative electrode active material layer satisfying $0.65 \leq W1/P \leq 4.4$, and optionally $1.1 \leq W1/P \leq 3.5$;

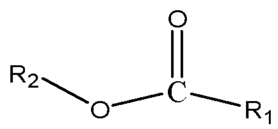

(I)

where $R_1$ and $R_2$ each independently include at least one of an alkyl group having 1 to 3 carbon atoms and a halogenated alkyl group having 1 to 3 carbon atoms.

In the embodiments of this application, the compound represented by formula (I) being used as the solvent or part of the solvent can reduce viscosity of the electrolyte and increase conductivity of the electrolyte. Based on the porosity P of the negative electrode active material layer, controlling the mass fraction W1 of the compound represented by formula (I) in the electrolyte within an appropriate range can effectively improve infiltration of the electrolyte, allowing a negative electrode active material layer with high compacted density and low porosity to be rapidly infiltrated by the electrolyte. This improves transport efficiency of lithium ions in the negative electrode active material layer, thereby improving cycling performance and safety performance of the lithium secondary battery while increasing energy density of the lithium secondary battery.

In some embodiments, $R_1$ and $R_2$ each independently include at least one of methyl group, ethyl group, propyl group, fluoromethyl group, fluoroethyl group, and fluoropropyl group.

In some embodiments, the porosity P of the negative electrode active material layer satisfies $18\% \leq P \leq 30.5\%$, and optionally $20\% \leq P \leq 27\%$.

In the embodiments of this application, controlling the porosity of the negative electrode active material layer

within an appropriate range allows a negative electrode plate corresponding to such porosity to have a high powder compacted density, so that the negative electrode plate per unit area or volume can load a greater amount of negative electrode active material, thereby achieving high energy density of the lithium secondary battery.

In some embodiments, the mass fraction W1 of the compound represented by formula (I) satisfies 20% ≤ W1 ≤ 80%, and optionally 30% ≤ W1 ≤ 70%.

In some embodiments, the compound represented by formula (I) includes at least one of the following compounds:

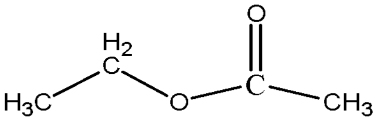

(I-I),

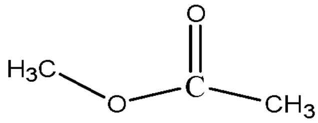

(I-II),

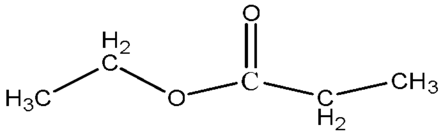

(I-III),

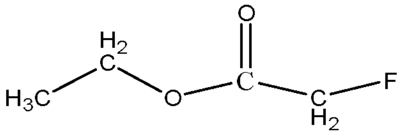

(I-IV),

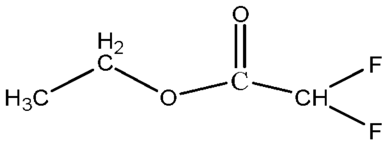

(I-V),

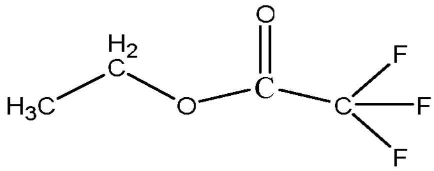

(I-VI),

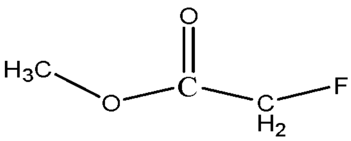

(I-VII),

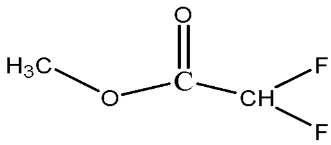

(I-VIII),

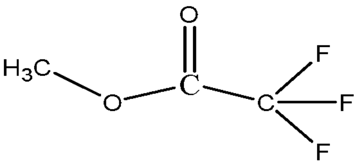

(I-IX),

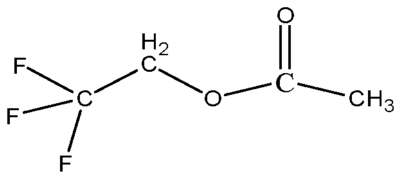

(I-X),

and

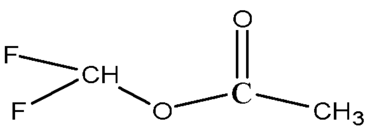

(I-XI);

and

optionally, the compound represented by formula (I) includes at least one of the compound represented by formula (I-I), the compound represented by formula (I-II), the compound represented by formula (I-V), and the compound represented by formula (I-VIII).

In some embodiments, the electrolyte includes a first additive, and the first additive includes at least one of a compound represented by formula (II) and a compound represented by formula (III):

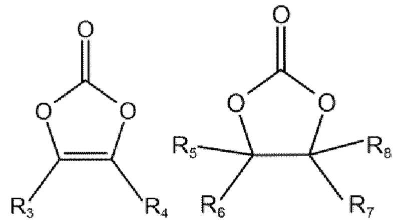

(II), and (III),

where $R_3$ and $R_4$ each independently include a hydrogen atom, a halogen atom, an alkyl group having 1 to 6 carbon atoms, a halogenated alkyl group having 1 to 6 carbon atoms, an alkoxy group having 1 to 6 carbon atoms, an alkenyl group having 2 to 6 carbon atoms, and an alkynyl group having 2 to 6 carbon atoms; and $R_5$, $R_6$, $R_7$, and $R_8$ each independently include a hydrogen atom, a halogen atom, an alkyl group having 1 to 6 carbon atoms, a halogenated alkyl group having 1 to 6 carbon atoms, an alkoxy group having 1 to 6 carbon atoms, an alkenyl group having 2 to 6 carbon atoms, and an alkynyl group having 2 to 6 carbon atoms, not all of $R_5$, $R_6$, $R_7$, and $R_8$ being hydrogen atoms.

In the embodiments of this application, introducing the first additive into the electrolyte facilitates formation of an organic-inorganic composite SEI (Solid Electrolyte Interface, SEI) film with a protective effect on a surface of the negative electrode active material layer of the lithium secondary battery, so as to prevent direct contact between the electrolyte and the negative electrode active material, which improves stability of a solid-liquid interface between the negative electrode active material layer and the electrolyte, and alleviates the problem of the electrolyte generating gas on the surface of the negative electrode active material layer in the lithium secondary battery, thereby further improving the cycling performance and safety performance of the lithium secondary battery. In addition, the compounds represented by formula (II) and formula (III) have a good film-forming effect on the surface of the negative electrode active material layer, and can form the SEI film evenly and rapidly during formation of the lithium secondary battery, so as to protect the negative electrode active material layer and prevent direct contact between the negative electrode active material layer and the electrolyte.

In some embodiments, $R_3$ and $R_4$ each independently include a hydrogen atom, a halogen atom, an alkyl group having 1 to 4 carbon atoms, a halogenated alkyl group having 1 to 4 carbon atoms, an alkoxy group having 1 to 4 carbon atoms, an alkenyl group having 2 to 4 carbon atoms, and an alkynyl group having 2 to 4 carbon atoms; and $R_5$, $R_6$, $R_7$, and $R_8$ each independently include a hydrogen atom, a halogen atom, an alkyl group having 1 to 4 carbon atoms, a halogenated alkyl group having 1 to 4 carbon atoms, an alkoxy group having 1 to 4 carbon atoms, an alkenyl group having 2 to 4 carbon atoms, and an alkynyl group having 2 to 4 carbon atoms, not all of $R_5$, $R_6$, $R_7$, and $R_8$ being hydrogen atoms.

In some embodiments, a mass fraction of the first additive in the electrolyte is W2, W2, W1, and P satisfying $0.00006 \leq W2 \times W1/P \leq 0.88$, optionally $0.0006 \leq W2 \times W1/P \leq 0.44$, and optionally $0.0013 \leq W2 \times W1/P \leq 0.22$.

In some embodiments, $0.01\% \leq W2 \leq 20\%$, optionally $0.1\% \leq W2 \leq 10\%$, and optionally $0.2\% \leq W2 \leq 5\%$.

In some embodiments, the first additive includes at least one of the following compounds:

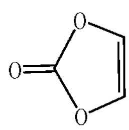
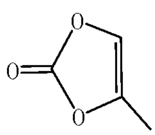
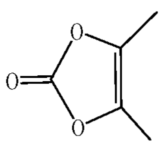
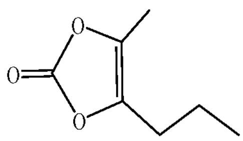
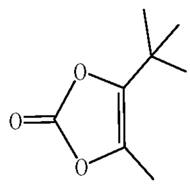

(II-I), (II-II), (II-III), (II-IV), (II-V),

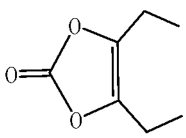 (II-VI), 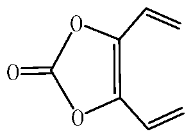 (II-VII), 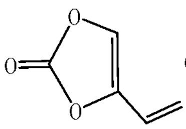 (II-VIII), 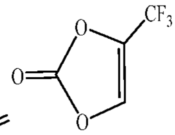 (II-IX), 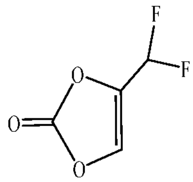 (II-X),

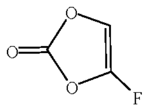 (II-XI), 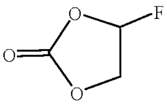 (III-I), 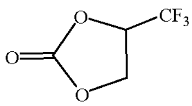 (III-II), 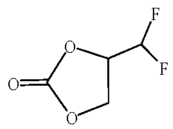 (III-III), 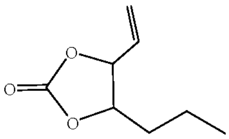 (III-IV),

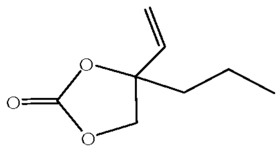 (III-V), 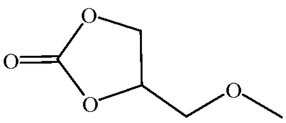 (III-VI), 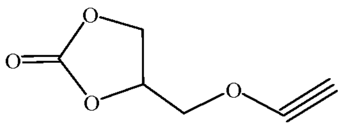 (III-VII),

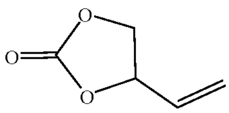 (III-VIII), 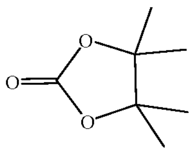 (III-IX), and 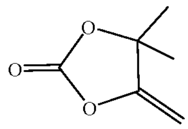 (III-X).

In some embodiments, the second additive includes at least one of $M^{a+}[F_wPO_t]^{b-}$, $M^{a+}[BF_4]^{b-}$, $M^{a+}[FSO_3]^{b-}$, and a compound represented by formula (IV):

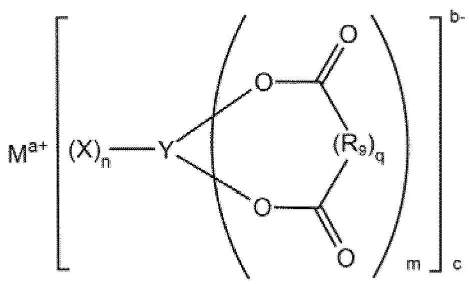

(IV),

where $M^{a+}$ includes at least one of a lithium ion, a sodium ion, a potassium ion, a rubidium ion, a cesium ion, a magnesium ion, a calcium ion, a barium ion, an aluminum ion, an iron ion, a copper ion, a nickel ion, and an organic cation, and a, b, and c all represent natural numbers; t represents an integer from 0 to 3, and w represents an integer from 1 to 6; X includes at least one of halogen atoms, and n represents an integer from 0 to 4; Y includes at least one of a boron atom and a phosphorus atom; and $R_9$ includes a substituted or unsubstituted alkylene group having 1 to 10 carbon atoms, a substituted or unsubstituted halogenated alkylene group having 1 to 10 carbon atoms, a substituted or unsubstituted arylene group having 6 to 20 carbon atoms, and a substituted or unsubstituted halogenated arylene group having 6 to 20 carbon atoms, q represents an integer of 0 or 1, and m represents an integer from 1 to 3.

In the embodiments of this application, introducing the second additive into the electrolyte allows for formation of

a SEI film with low impedance on the surface of the negative electrode active material layer, which further improves the stability of the solid-liquid interface between the negative electrode active material layer and the electrolyte, and alleviates the problem of the electrolyte generating gas on the surface of the negative electrode active material layer, thereby further improving the cycling performance and safety performance of the lithium secondary battery. In addition, after the SEI film is formed on the surface of the negative electrode active material layer, the second additive has little influence on impedance of the lithium secondary battery, which avoids severe heating of the lithium secondary battery during charging and discharging caused by excessive impedance, thereby helping to improve the charging and discharging performance and safety performance of the lithium secondary battery.

In some embodiments, a mass fraction of the second additive in the electrolyte is W3, W3, W1, and P satisfying $0.00006 \leq W3 \times W1/P \leq 0.88$, optionally $0.0006 \leq W3 \times W1/P \leq 0.44$, and optionally $0.0013 \leq W3 \times W1/P \leq 0.22$.

In some embodiments, $0.01\% \leq W3 \leq 20\%$, optionally $0.1\% \leq W3 \leq 10\%$, and optionally $0.2\% \leq W3 \leq 5\%$.

In some embodiments, in $M^{a+}[FSO_3]^{b-}$, $M^{a+}$ includes at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, and $Ni^{3+}$.

In some embodiments, the negative electrode active material layer includes a negative electrode active material, and a median particle size $D_v50_0$ of the negative electrode active material satisfies $6\ \mu m \leq D_v50_0$, and optionally $15\ \mu m \leq D_v50_0 \leq 20\ \mu m$.

In some embodiments, a specific surface area of the negative electrode active material satisfies $0.5\ m^2/g \leq BET \leq 2.0\ m^2/g$, and optionally $0.8\ m^2/g \leq BET \leq 1.5\ m^2/g$.

In some embodiments, the lithium secondary battery includes a positive electrode plate, where the positive electrode plate includes a positive electrode current collector and a positive electrode active material layer disposed on the positive electrode current collector, and the positive electrode active material layer includes a first positive electrode active material and a second positive electrode active material; where a median particle size $D_v50_1$ of the first positive electrode active material satisfies $8\ \mu m \leq D_v50_1 \leq 50\ \mu m$; and a median particle size $D_v50_2$ of the second positive electrode active material satisfies $0.02\ \mu m \leq D_v50_2 \leq 8\ \mu m$.

In some embodiments, a mass fraction W4 of the second positive electrode active material in the positive electrode active material layer satisfies $0\% \leq W4 \leq 60\%$, and optionally $20\% \leq W4 \leq 40\%$.

According to a second aspect, an electric apparatus is provided, where the electric apparatus includes the lithium secondary battery according to any one of the embodiments of the first aspect.

Therefore, the lithium secondary battery provided in this application has both high energy density and good cycling performance and safety performance.

## BRIEF DESCRIPTION OF DRAWINGS

To describe the technical solutions in the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts. The accompanying drawings are not drawn to scale.

FIG. 1 is a schematic diagram of a lithium secondary battery of this application.
FIG. 2 is a schematic structural diagram of a lithium secondary battery of this application.
FIG. 3 is a schematic structural diagram of a battery module of this application.
FIG. 4 is a schematic diagram of a battery pack of this application.
FIG. 5 is a schematic structural diagram of a battery pack of this application.
FIG. 6 is a schematic diagram of an electric apparatus of this application.

## DESCRIPTION OF EMBODIMENTS

The following specifically discloses in detail embodiments of the lithium secondary battery and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning

any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

In the description of this application, it should be noted that unless otherwise stated, "a plurality of" means more than two; and the orientations or positional relationships indicated by the terms "upper", "lower", "left", "right", "inside", "outside", and the like are merely for ease and brevity of description of this application rather than indicating or implying that the apparatuses or elements mentioned must have specific orientations or be constructed and manipulated according to specific orientations, and therefore shall not be construed as any limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Unless otherwise stated, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise stated, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise stated, the following terms have the following meanings. Any undefined terms have their technically well-known meanings.

The term "alkyl group" has a general meaning, and refers to a hydrocarbon group formed by removing one hydrogen atom from an alkane molecule, optionally having 1 to 3 carbon atoms. For example, the alkyl group includes a linear hydrocarbon group and a branched hydrocarbon group, such as methyl group, ethyl group, n-propyl group, and isopropyl group.

The term "halogenated alkyl group" has a general meaning, and refers to an alkyl group in which one or more hydrogen atoms on one or more carbon atoms in a linear, branched, or cyclic skeleton are substituted by halogen atoms, such as monochloromethyl, monofluoromethyl, trifluoromethyl, monofluoroethyl, and monofluoropropyl.

The term "alkoxy group" has a general meaning, and refers to an alkyl group bonded to oxygen, optionally having 2 to 6 carbon atoms, such as ethoxy group.

The term "alkenyl group" has a general meaning, and refers to a hydrocarbon group having one or more carbon atoms and at least one unsaturated site with a double bond, optionally having 2 to 6 carbon atoms. For example, the alkenyl group includes a linear alkenyl group and a linear alkenyl group, such as vinyl group, propenyl group, and n-butenyl group. In some other examples, the alkenyl group may further include a cyclic alkenyl group, a bicyclic alkenyl group, and the like, such as cyclohexyl group.

The term "alkynyl group" has a general meaning, and refers to a hydrocarbon group having one or more carbon-carbon triple bonds, optionally having 2 to 6 carbon atoms, such as ethynyl group.

The term "halogen atom" has a general meaning, and refers to a fluorine atom, a chlorine atom, a bromine atom, an iodine atom, and an astatine atom.

The term "alkylene group" has a general meaning, and refers to a divalent hydrocarbon group having one or more carbon atoms, optionally having 1 to 10 carbon atoms. For example, the alkylene group includes a divalent linear hydrocarbon group and a divalent branched hydrocarbon group, such as ethylene group, methylethylene group, and n-propylene group.

The term "substituted alkylene group" has a general meaning, and refers to an alkylene group in which one or

more hydrogen atoms on one or more carbon atoms in a linear, branched, or cyclic skeleton are substituted by the same or different heteroatoms or groups. The heteroatom or group includes but is not limited to a halogen atom and a phenyl group.

The term "halogenated alkylene group" has a general meaning, and refers to an alkylene group in which one or more hydrogen atoms on one or more carbon atoms in a linear, branched, or cyclic skeleton are substituted by the same or different halogen atoms.

The term "substituted halogenated alkylene group" has a general meaning, and refers to a halogenated alkylene group in which one or more hydrogen atoms on one or more carbon atoms in a linear, branched, or cyclic skeleton are substituted by the same or different heteroatoms or groups.

The term "arylene group" has a general meaning, and refers to a divalent aryl group derived by removing one hydrogen atom from each of two different carbon atoms of an aromatic compound or removing two hydrogen atoms from one carbon atom of an aromatic compound.

The term "substituted arylene group" has a general meaning, and refers to an arylene group in which one or more hydrogen atoms on one or more carbon atoms in a linear, branched, or cyclic skeleton are substituted by the same or different heteroatoms or groups.

The term "halogenated arylene group" has a general meaning, and refers to an arylene group in which one or more hydrogen atoms on one or more carbon atoms in a linear, branched, or cyclic skeleton are substituted by the same or different halogen atoms.

The term "substituted halogenated arylene group" refers to a halogenated arylene group in which one or more hydrogen atoms on one or more carbon atoms in a linear, branched, or cyclic skeleton are substituted by the same or different heteroatoms or groups.

The following describes the embodiments of this application.

In recent years, secondary batteries have been widely used in many fields such as electric tools, electronic products, electric vehicles, and aerospace due to their high energy density and long service life, leading to significant progress. Generally, a secondary battery includes a positive electrode plate, a negative electrode plate, an electrolyte, and a separator. During charging and discharging of the battery, active ions are intercalated and deintercalated back and forth between the positive electrode plate and the negative electrode plate. The electrolyte conducts the active ions between the positive electrode plate and the negative electrode plate. The separator is disposed between the positive electrode plate and the negative electrode plate to allow the active ions to pass through while preventing short circuit between a positive electrode and a negative electrode, allowing for normal progress of electrochemical reactions in the secondary battery.

A lithium-ion secondary battery is used as an example. The lithium secondary battery is a typical secondary battery. Because the lithium secondary battery relies on chemical reactions of deintercalation and intercalation of lithium ions between the positive electrode and the negative electrode for charging and discharging, the lithium secondary battery is also referred to as a rocking-chair battery. During charging of the lithium secondary battery, lithium ions are deintercalated from a positive electrode active material, move to the negative electrode through conduction of the electrolyte, and are intercalated into a negative electrode active material. During discharging, lithium ions are deintercalated from the negative electrode active material, move to the positive electrode through conduction of the electrolyte, and are intercalated into the positive electrode active material.

It should be understood that the processes of "lithium intercalation" and "intercalated" mentioned in this application refer to the process in which lithium ions are intercalated into the positive electrode active material or the negative electrode active material due to electrochemical reactions, and the processes of "deintercalated", "lithium deintercalation", and "deintercalation" mentioned in this application refer to the process in which lithium ions are deintercalated from the positive electrode active material or the negative electrode active material due to electrochemical reactions.

With increasingly wide use of the lithium secondary batteries, higher requirements are imposed on energy density of the lithium secondary batteries. Increasing powder compacted densities of the positive and negative electrode plates to allow the negative electrode plate per unit area or volume to load a greater amount of positive and negative electrode active materials can effectively increase the energy density of the lithium secondary battery. A negative electrode plate is used as an example. With the increase in the powder compacted density of the negative electrode plate, a porosity of a negative electrode active material layer decreases. It can be learned from the above that during charging of the lithium secondary battery, lithium ions are deintercalated from the positive electrode active material, move to the negative electrode through conduction of the electrolyte, and are intercalated into the negative electrode active material. An excessively high powder compacted density leads to the electrolyte being unable to infiltrate the negative electrode active material layer, which in turn hinders internal transport of lithium ions in the negative electrode active material layer, causing the problems such as lithium precipitation on the negative electrode plate and gas generation caused by side reactions in the electrolyte, thereby threatening cycling performance and safety performance of the lithium secondary battery.

In view of this, the embodiments of this application provide a lithium secondary battery. In the lithium secondary battery, a solvent of an electrolyte includes a linear carboxylate compound represented by formula (I), where the

compound represented by formula (I) has low viscosity, which can improve fluidity and infiltration of the electrolyte. In addition, in the lithium secondary battery, a mass fraction of the compound represented by formula (I) is controlled within an appropriate range based on a porosity of a negative electrode active material layer, so that the negative electrode active material layer with low porosity can be infiltrated by the electrolyte, improving transport of lithium ions in the negative electrode active material layer with low porosity. This improves the cycling performance and safety performance of the lithium secondary battery while achieving the lithium secondary battery with high energy density.

In an embodiment of this application, a lithium secondary battery is provided. Generally, the lithium secondary battery includes a positive electrode plate, a negative electrode plate, an electrolyte, and a separator. The following describes the lithium secondary battery provided in this application and various parts of the lithium secondary battery.

In an embodiment of this application, a lithium secondary battery is provided, where the lithium secondary battery includes a negative electrode plate and an electrolyte.

The negative electrode plate includes a negative electrode current collector and a negative electrode active material layer disposed on at least one side of the negative electrode current collector, and a porosity of the negative electrode active material layer is P.

The electrolyte includes a solvent, the solvent includes at least one of compounds represented by the following formula (I), and a mass fraction of the compound represented by formula (I) in the solvent is W1, the mass fraction W1 of the compound represented by formula (I) and the porosity P of the negative electrode active material layer satisfying $0.65 \leq W1/P \leq 4.4$, and optionally $1.1 \leq W1/P \leq 3.5$;

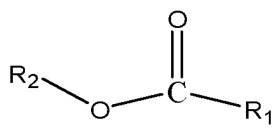

(I)

where $R_1$ and $R_2$ each independently include at least one of an alkyl group having 1 to 3 carbon atoms and a halogenated alkyl group having 1 to 3 carbon atoms.

Specifically, W1/P may be 0.65, 0.7, 0.75, 0.8, 0.85, 0.9, 0.95, 1.0, 1.1, 1.2, 1.3, 1.4, 1.5, 1.6, 1.7, 1.8, 1.9, 2.0, 2.2, 2.4, 2.6, 2.8, 3.0, 3.2, 3.4, 3.5, 3.6, 3.8, 4.0, 4.2, 4.4, or a value within a range defined by any two of these values.

In this embodiment, the lithium secondary battery has the negative electrode active material layer with the porosity P and the electrolyte matched with the negative electrode active material layer. The solvent of the electrolyte includes the compound represented by formula (I), such that the electrolyte has low viscosity, resulting in good fluidity. Controlling the mass fraction W1 of the compound in the solvent based on the porosity P of the negative electrode active material layer so that W1/P is within an appropriate range can allow the negative electrode active material layer with the porosity P to be effectively infiltrated by the electrolyte. This improves transport efficiency of lithium ions in the negative electrode active material layer and improves rate performance of the lithium secondary battery, thereby allowing the lithium secondary battery to have both high energy density and good cycling performance and safety performance.

In an embodiment of this application, the solvent may include only the compound represented by formula (I). When the solvent includes only the compound represented by formula (I), due to high conductivity and low viscosity of the compound represented by formula (I), the electrolyte has good conductivity and fluidity and improved infiltration, improving the transport efficiency of lithium ions in the negative electrode active material layer when the negative electrode active material layer has low porosity, thereby helping to improve the cycling performance and safety performance of the lithium secondary battery while achieving the lithium secondary battery with high energy density.

Optionally, $R_1$ and $R_2$ each independently include at least one of methyl group, ethyl group, propyl group, fluoromethyl group, fluoroethyl group, and fluoropropyl group.

Optionally, the compound represented by formula (I) includes at least one of the following compounds:

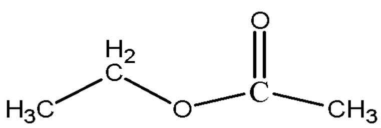

(I-I),

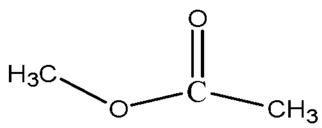

(I-II),

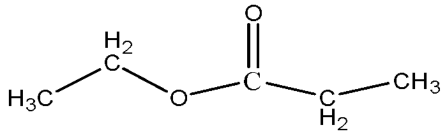

(I-III),

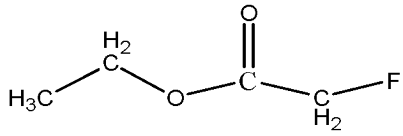

(I-IV),

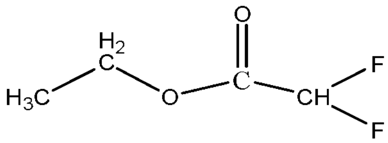

(I-V),

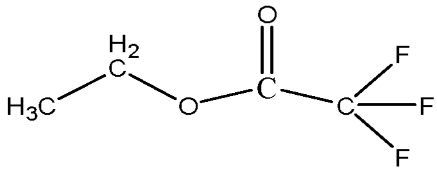

(I-VI),

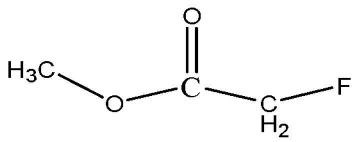

(I-VII),

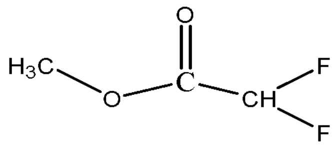

(I-VIII),

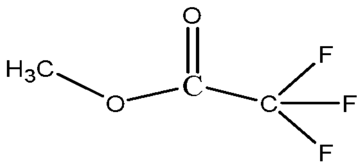

(I-IX),

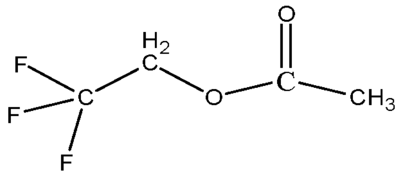

(I-X), and

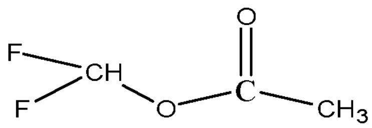

(I-XI); and

optionally, the compound represented by formula (I) includes at least one of the compound represented by formula (I-I), the compound represented by formula (I-II), the compound represented by formula (I-V), and the compound represented by formula (I-VIII).

The following describes in detail the positive electrode plate, electrolyte, negative electrode plate, and separator in the lithium secondary battery.

[Electrolyte]

The electrolyte conducts lithium ions between the positive electrode plate and the negative electrode plate. The electrolyte includes a solute and a solvent, where the solute is dissolved in the solvent to form an electrolyte with a homogeneous phase.

In the lithium secondary battery provided in this application, the solvent of the electrolyte includes the compound represented by formula (I).

Optionally, the mass fraction W1 of the compound represented by formula (I) in the electrolyte is negatively correlated with the porosity P of the negative electrode active material layer.

Specifically, with the decrease in the porosity P of the negative electrode active material, a high proportion of the compound represented by formula (I) is needed to reduce the viscosity of the electrolyte and improve the fluidity of the electrolyte, thereby ensuring effective infiltration for the negative electrode active material layer.

Optionally, the mass fraction W1 of the compound represented by formula (I) satisfies 20% $\leq$ W1 $\leq$ 80%, and optionally 30% $\leq$ W1 $\leq$ 70%.

Specifically, W1 may be 20%, 25%, 30%, 35%, 40%, 45%, 50%, 55%, 60%, 65%, 70%, 75%, 80%, or a value within a range defined by any two of these values.

Optionally, in some other embodiments, the solvent may further include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

Optionally, the solute of the electrolyte includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

Optionally, the electrolyte includes a first additive, and the first additive includes at least one of a compound represented by formula (II) and a compound represented by formula (III):

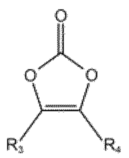

(II), and

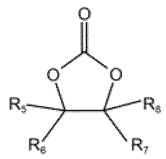

(III),

where $R_3$ and $R_4$ each independently include a hydrogen atom, a halogen atom, an alkyl group having 1 to 6 carbon atoms, a halogenated alkyl group having 1 to 6 carbon atoms, an alkoxy group having 1 to 6 carbon atoms, an alkenyl group having 2 to 6 carbon atoms, and an alkynyl group having 2 to 6 carbon atoms; and $R_5$, $R_6$, $R_7$, and $R_8$ each independently include a hydrogen atom, a halogen atom, an alkyl group having 1 to 6 carbon atoms, a halogenated alkyl group having 1 to 6 carbon atoms, an alkoxy group having 1 to 6 carbon atoms, an alkenyl group having 2 to 6 carbon atoms, and an alkynyl group having 2 to 6 carbon atoms, not all of $R_5$, $R_6$, $R_7$, and $R_8$ being hydrogen atoms.

Specifically, the electrolyte may further include an additive, for example, the first additive. The first additive is a negative electrode film-forming additive, and can form a stable organic-inorganic composite solid electrolyte interface (Solid Electrolyte Interface, SEI) film on a surface of the negative electrode active material layer, thereby reducing direct contact between the negative electrode active material layer and the electrolyte. In the electrolyte, the compound represented by formula (I) being introduced as the solvent or part of the solvent helps to reduce the viscosity of the electrolyte and improve the infiltration of the electrolyte. In addition, the compound represented by formula (I) may undergo side reactions on the surface of the negative electrode active material to generate gas during charging and discharging of the lithium secondary battery, which consumes the electrolyte in the lithium secondary battery and destroys structures of the negative electrode active material and negative electrode active material layer, thereby affecting the cycling performance and safety performance of the lithium secondary battery.

Therefore, in this embodiment, introducing the first additive into the electrolyte can effectively prevent direct contact between the negative electrode active material layer and the electrolyte, reducing the probability of the electrolyte generating gas on the surface of the negative electrode active material layer, thereby improving the cycling performance and safety performance of the lithium secondary battery. In addition, the compounds represented by formula (II) and formula (III) form an organic-inorganic composite SEI film on the surface of the negative electrode active material layer, which exhibits a good film-forming effect and facilitates uniform and rapid formation of the SEI film on the surface of the negative electrode active material layer during formation of the lithium secondary battery

Optionally, $R_3$ and $R_4$ each independently include a hydrogen atom, a halogen atom, an alkyl group having 1 to 4 carbon atoms, a halogenated alkyl group having 1 to 4 carbon atoms, an alkoxy group having 1 to 4 carbon atoms, an alkenyl group having 2 to 4 carbon atoms, and an alkynyl group having 2 to 4 carbon atoms; and $R_5$, $R_6$, $R_7$, and $R_8$ each independently include a hydrogen atom, a halogen atom, an alkyl group having 1 to 4 carbon atoms, a halogenated alkyl group having 1 to 4 carbon atoms, an alkoxy group having 1 to 4 carbon atoms, an alkenyl group having 2 to 4 carbon atoms, and an alkynyl group having 2 to 4 carbon atoms, not all of $R_5$, $R_6$, $R_7$, and $R_8$ being hydrogen atoms.

Optionally, a mass fraction of the first additive in the electrolyte is W2, the mass fraction W2 of the first additive in the electrolyte, the mass fraction W1 of the compound represented by formula (I) in the electrolyte, and the porosity P of the negative electrode active material layer satisfying 0.00006 $\leq$ W2$\times$W1/P $\leq$ 0.88, optionally 0.0006 $\leq$ W2$\times$W1/P $\leq$ 0.44, and optionally 0.0013 $\leq$ W2$\times$W1/P $\leq$ 0.22.

Specifically, W2$\times$W1/P may be 0.00006, 0.00009, 0.00012, 0.0002, 0.0003, 0.0004, 0.0005, 0.0006, 0.0007,

0.0008, 0.0009, 0.0010, 0.0011, 0.0012, 0.0013, 0.0014, 0.0015, 0.0016, 0.0017, 0.0018, 0.002, 0.004, 0.006, 0.008, 0.01, 0.02, 0.04, 0.06, 0.08, 0.10, 0.15, 0.20, 0.22, 0.24, 0.26, 0.28, 0.30, 0.35, 0.40, 0.42, 0.44, 0.46, 0.48, 0.50, 0.55, 0.60, 0.65, 0.70, 0.75, 0.80, 0.82, 0.84, 0.86, 0.88, or a value within a range defined by any two of these values.

Optionally, the mass fraction W2 of the first additive in the electrolyte is positively correlated with the mass fraction W1 of the compound represented by formula (I) in the electrolyte.

Specifically, with the increase in the percentage of the compound represented by formula (I) in the electrolyte, the probability of the compound represented by formula (I) generating gas on the surface of the negative electrode active material layer increases. Therefore, a greater amount of first additive is needed to form a film on the surface of the negative electrode active material layer to prevent gas generation caused by reduction reactions of more of the compound represented by formula (I) on the surface of the negative electrode active material layer.

Optionally, 0.01% ≤ W2 ≤ 20%, optionally 0.1% ≤ W2 ≤ 10%, and optionally 0.2% ≤ W2 ≤ 5%.

Specifically, W2 may be 0.01%, 0.02%, 0.03%, 0.04%, 0.05%, 0.06%, 0.07%, 0.08%, 0.09%, 0.1%, 0.2%, 0.4%, 0.6%, 0.8%, 1%, 5%, 10%, 20%, or a value within a range defined by any two of these values.

Optionally, the first additive includes at least one of the following compounds:

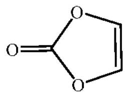 (II-I), 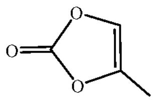 (II-II), 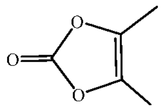 (II-III), 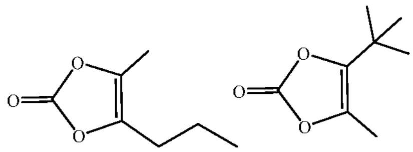 (II-IV), (II-V),

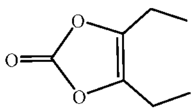 (II-VI), 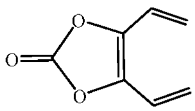 (II-VII), 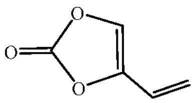 (II-VIII), 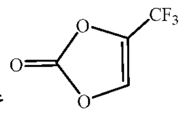 (II-IX), 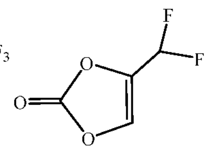 (II-X),

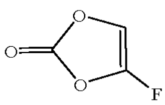 (II-XI), 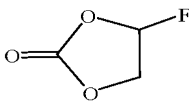 (III-I), 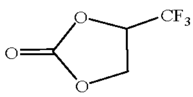 (III-II), 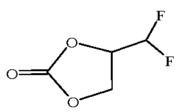 (III-III), 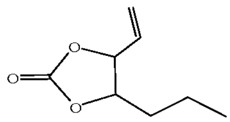 (III-IV),

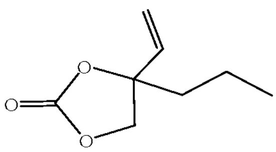 (III-V), 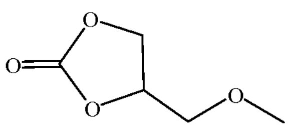 (III-VI), 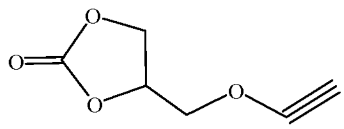 (III-VII),

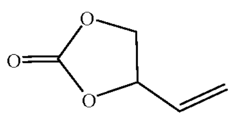 (III-VIII), 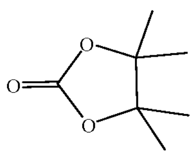 (III-IX), and 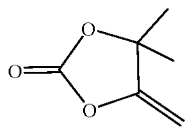 (III-X).

Optionally, the electrolyte includes a second additive, and the second additive includes at least one of $M^{a+}[F_wPO_t]^{b-}$, $M^{a+}[BF_4]^{b-}$, $M^{a+}[FSO_3]^{b-}$, and a compound represented by formula (IV):

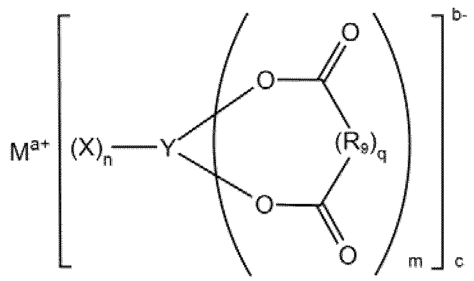

(IV),

where $M^{a+}$ includes at least one of a lithium ion, a sodium ion, a potassium ion, a rubidium ion, a cesium ion, a magnesium ion, a calcium ion, a barium ion, an aluminum ion, an iron ion, a copper ion, a nickel ion, and an organic cation, and a, b, and c all represent natural numbers; t represents an integer from 0 to 3, and w represents an integer from 1 to 6; X includes at least one of halogen atoms, and n represents an integer from 0 to 4; Y includes at least one of a boron atom and a phosphorus atom; and $R_9$ includes a substituted or unsubstituted alkylene group having 1 to 10 carbon atoms, a substituted or unsubstituted halogenated alkylene group having 1 to 10 carbon atoms, a substituted or unsubstituted arylene group having 6 to 20 carbon atoms, and a substituted or unsubstituted halogenated arylene group having 6 to 20 carbon atoms, q represents an integer of 0 or 1, and m represents an integer from 1 to 3.

Specifically, the electrolyte may further include another negative electrode film-forming additive, that is, the second additive. The second additive can also form a stable SEI film on the surface of the negative electrode active material layer, so as to prevent direct contact between the electrolyte and the negative electrode active material layer, protecting the negative electrode active material, and preventing the electrolyte from generating gas on the surface of the negative electrode active material layer, thereby further improving the cycling performance of the lithium secondary battery. In addition, after the film is formed, the second additive has little influence on impedance of the lithium secondary battery, which avoids affecting the charging and discharging performance and safety performance of the battery due to lithium precipitation of the lithium secondary battery during charging and discharging caused by excessive impedance.

It should be understood that the electrolyte may include only the first additive, only the second additive, or both the first additive and the second additive. When the electrolyte includes both the first additive and the second additive, the first additive and the second additive generate a synergistic effect to jointly form an SEI film on the surface of the negative electrode active material layer, which exhibits a good film-forming effect and has little influence on the impedance of the lithium secondary battery.

Optionally, a mass fraction of the second additive in the electrolyte is W3, the mass fraction W3 of the second additive in the electrolyte, the mass fraction of the compound represented by formula (I) in the electrolyte, and the porosity P of the negative electrode active material satisfying $0.00006 \leq W3 \times W1/P \leq 0.88$, optionally $0.0006 \leq W3 \times W1/P \leq 0.44$, and optionally $0.0013 \leq W3 \times W1/P \leq 0.22$.

Specifically, $W3 \times W1/P$ may be 0.00006, 0.00009, 0.00012, 0.0002, 0.0003, 0.0004, 0.0005, 0.0006, 0.0007, 0.0008, 0.0009, 0.0010, 0.0011, 0.0012, 0.0013, 0.0014, 0.0015, 0.0016, 0.0017, 0.0018, 0.002, 0.004, 0.006, 0.008, 0.01, 0.02, 0.04, 0.06, 0.08, 0.10, 0.15, 0.20, 0.22, 0.24, 0.26, 0.28, 0.30, 0.35, 0.40, 0.42, 0.44, 0.46, 0.48, 0.50, 0.55, 0.60, 0.65, 0.70, 0.75, 0.80, 0.82, 0.84, 0.86, 0.88, or a value within a range defined by any two of these values.

Optionally, the mass fraction W3 of the second additive in the electrolyte is positively correlated with the mass fraction W1 of the compound represented by formula (I) in the electrolyte.

It is similar to the first additive that with the increase in the percentage of the compound represented by formula (I) in the electrolyte, the probability of the compound represented by formula (I) generating gas on the surface of the negative electrode active material layer increases. Therefore, a greater amount of negative electrode film-forming additive is needed to form a film on the surface of the negative electrode active material layer to prevent gas generation caused by reduction reactions of more of the compound represented by formula (I) on the surface of the negative electrode active material layer.

Optionally, $0.01\% \leq W3 \leq 20\%$, optionally $0.1\% \leq W3 \leq 10\%$, and optionally $0.2\% \leq W3 \leq 5\%$.

Specifically, W3 may be 0.01%, 0.02%, 0.03%, 0.04%, 0.05%, 0.06%, 0.07%, 0.08%, 0.09%, 0.1%, 0.2%, 0.4%, 0.6%, 0.8%, 1%, 5%, 10%, 20%, or a value within a range defined by any two of these values.

Optionally, in $M^{a+}[FSO_3]^{b-}$, $M^{a+}$ includes at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, and $Ni^{3+}$.

Optionally, the electrolyte may further include an additive capable of improving some performance of the battery, for example, an additive for improving overcharge performance of the battery, or an additive for improving high-temperature or low-temperature performance of the battery.

[Negative electrode plate]

The negative electrode plate generally includes a negative electrode current collector and a negative electrode active material layer disposed on at least one surface of the negative electrode current collector, and the negative electrode active material layer includes a negative electrode active material.

In an example, the negative electrode current collector includes two back-to-back surfaces in a thickness direction of the negative electrode current collector, and the positive electrode active material layer is disposed on either or both of the two back-to-back surfaces of the negative electrode current collector.

Optionally, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

Optionally, the porosity P of the negative electrode active material layer satisfies $18\% \leq P \leq 30.5\%$, and optionally $20\% \leq P \leq 27\%$.

Specifically, P may be 18%, 19%, 20%, 21%, 22%, 23%, 24%, 25%, 26%, 27%, 28%, 29%, 30%, 30.5%, 31%, 31.5%, 32%, or a value within a range defined by any two of these values.

In this embodiment, controlling the porosity of the negative electrode active material layer within an appropriate range allows a negative electrode plate corresponding to such porosity to have a high powder compacted density, so that the negative electrode plate per unit area or volume can load a greater amount of negative electrode active material, thereby achieving high energy density of the lithium secondary battery.

Optionally, a median particle size (by volume) $D_v50_0$ of the negative electrode active material satisfies $6\ \mu m \leq D_v50_0$, and optionally $15\ \mu m \leq D_v50_0 \leq 20\ \mu m$.

Specifically, $Dv50_0$ may be 6 μm, 7 μm, 8 μm, 9 μm, 10 μm, 11 μm, 12 μm, 13 μm, 14 μm, 15 μm, 16 μm, 17 μm, 18 μm, 19 μm, 20 μm, or a value within a range defined by any two of these values.

In this embodiment, setting the median particle size (by volume) of the negative electrode active material within an appropriate range helps to increase the powder compacted density of the negative electrode active material layer. In addition, after the first additive and/or the second additive forms the SEI film on the surface of the negative electrode active material layer, the negative electrode active material on the surface of the negative electrode active material layer has increased median particle size (by volume) and decreased specific surface area, which helps to further reduce contact between the negative electrode active material and the electrolyte, and in turn reduces the probability of the electrolyte generating gas on the surface of the negative electrode active material layer, thereby helping to improve the cycling performance of the lithium secondary battery.

Optionally, a specific surface area of the negative electrode active material satisfies $0.5\ m^2/g \leq BET \leq 2.0\ m^2/g$, and optionally $0.8\ m^2/g \leq BET \leq 1.5\ m^2/g$.

Specifically, BET may be 0.5 $m^2/g$, 0.6 $m^2/g$, 0.7 $m^2/g$, 0.8 $m^2/g$, 0.9 $m^2/g$, 1.0 $m^2/g$, 1.1 $m^2/g$, 1.2 $m^2/g$, 1.3 $m^2/g$, 1.5 $m^2/g$, 1.6 $m^2/g$, 1.7 $m^2/g$, 1.8 $m^2/g$, 1.9 $m^2/g$, 2.0 $m^2/g$, or a value within a range defined by any two of these values.

In this embodiment, with the specific surface area of the negative electrode active material set within an appropriate range, after the first additive and/or the second additive forms the SEI film on the surface of the negative electrode active material layer, the negative electrode active material on the surface of the negative electrode active material layer has further decreased specific surface area, which helps to reduce the probability of the electrolyte generating gas on the surface of the negative electrode active material layer, thereby further improving the cycling performance of the lithium secondary battery.

Optionally, the negative electrode active material layer further includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

Optionally, in an embodiment, the negative electrode active material layer further includes a conductive agent. The conductive agent may be selected from at least one of superconducting carbon, acetylene black, carbon black, Ketjen black, carbon dots, carbon nanotubes, graphene, and carbon nanofiber.

Optionally, the negative electrode active material layer further includes other additives such as a thickener (for example, sodium carboxymethyl cellulose (CMC-Na)).

In some embodiments, the negative electrode plate may be prepared in the following manner: the constituents used for preparing the negative electrode plate are used to produce a negative electrode slurry. For example, the negative electrode active material, the conductive agent, the binder, and any other constituent are dispersed in a solvent (for example, N-methylpyrrolidone) to produce a negative electrode slurry. Then, the negative electrode slurry is applied onto the negative electrode current collector, followed by processes such as drying and cold pressing to obtain the negative

electrode plate.

[Positive electrode plate]

The positive electrode plate includes a positive electrode current collector and a positive electrode active material layer disposed on at least one surface of the positive electrode current collector.
In an example, the positive electrode current collector includes two back-to-back surfaces in a thickness direction of the positive electrode current collector, and the positive electrode active material layer is disposed on either or both of the two back-to-back surfaces of the positive electrode current collector.
Optionally, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).
Optionally, the positive electrode active material layer includes a first positive electrode active material and a second positive electrode active material.
Optionally, the first positive electrode active material may be a positive electrode active material for batteries well known in the art. In an example, the first positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.
Optionally, a median particle size (by volume) $D_v50_1$ of the first positive electrode active material satisfies 8 $\mu m \leq D_v50_1 \leq 50$ $\mu m$.
Specifically, $D_v50_1$ may be 8 μm, 10 μm, 15 μm, 20 μm, 25 μm, 30 μm, 35 μm, 40 μm, 45 μm, 50 μm, or a value within a range defined by any two of these values.
Optionally, the second positive electrode active material may also be a positive electrode active material for batteries well known in the art, provided that the median particle size (by volume) of the second positive electrode active material is smaller than that of the selected first positive electrode active material. In an example, the second positive electrode active material may include at least one of the following materials: olivine-structured lithium-containing phosphate, lithium transition metal oxide, and respective modified compounds thereof. Examples of the lithium transition metal oxide may include but are not limited to at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. One of these positive electrode active materials may be used alone, or two or more of them may be used in combination.
Optionally, a median particle size (by volume) $D_v50_2$ of the second positive electrode active material satisfies $0.02\ \mu m \leq D_v50_2 \leq 8\ \mu m$.
Specifically, $D_v50_2$ may be 0.02 μm, 0.04 μm, 0.06 μm, 0.08 μm, 0.1 μm, 0.5 μm, 1 μm, 2 μm, 4 μm, 6 μm, 8 μm, or a value within a range defined by any two of these values.
Optionally, a mass fraction W4 of the second positive electrode active material in the positive electrode active material layer satisfies $0\% \leq W4 \leq 60\%$, and further optionally $20\% \leq W4 \leq 40\%$.
Specifically, W4 may be 0%, 2%, 4%, 6%, 8%, 10%, 12%, 14%, 16%, 18%, 20%, 25%, 30%, 40%, 50%, 60%, or a value within a range defined by any two of these values.

It should be understood that the first positive electrode active material and the second positive electrode active material may be active materials of the same type. For example, the first positive electrode active material is lithium iron phosphate with a micronscale median particle size by volume, and the second positive electrode active material is lithium iron phosphate with a nanoscale median particle size by volume. The first positive electrode active material and the second positive electrode active material may alternatively be active materials of different types. For example, the first positive electrode active material is lithium iron phosphate with a micronscale median particle size, and the second positive electrode active material is lithium manganese iron phosphate with a nanoscale median particle size by volume.

In this embodiment, matching the first active material with a larger median particle size (by volume) with the second active material with a smaller median particle size (by volume) helps to increase the powder compacted density of the positive electrode active material layer, thereby increasing the energy density of the lithium secondary battery.

Optionally, the positive electrode active material layer further includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

Optionally, the positive electrode active material layer further includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the constituents used for preparing the positive electrode plate are used to produce a positive electrode slurry. For example, the first positive electrode active material and/or the second positive electrode active material, the conductive agent, the binder, and any other constituent are dispersed in a solvent (for example, N-methylpyrrolidone) to produce a positive electrode slurry. Then, the positive electrode slurry is applied onto the positive electrode current collector, followed by processes such as drying and cold pressing to obtain the positive electrode plate.

[Separator]

Optionally, in an embodiment, the lithium secondary battery further includes a separator. The separator is not limited to a particular type in this application, for example, may be any well-known porous separator with good chemical stability and mechanical stability.

Optionally, in an embodiment, material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

Optionally, in an embodiment, the positive electrode plate, the negative electrode plate, and the separator may be made into an electrode assembly through winding or lamination.

Optionally, in an embodiment, the lithium secondary battery includes an outer package. The outer package may be used for packaging the foregoing electrode assembly and electrolyte.

Optionally, in an embodiment, the outer package of the lithium secondary battery may be a hard shell, for example, a hard plastic shell, an aluminum shell, or a steel shell. The outer package of the lithium secondary battery may alternatively be a soft pack, for example, a soft pouch. Material of the soft pack may be plastic. Polypropylene, polybutylene terephthalate, polybutylene succinate, and the like may be listed as the plastic.

The lithium secondary battery is not limited to a particular shape in this application, and may be cylindrical, rectangular, or of any other shapes. For example, FIG. 1 shows a rectangular lithium secondary battery 10 as an example.

In some embodiments, referring to FIG. 2, the outer package may include a housing 22 and a cover plate 21. The housing 22 may include a base plate and a side plate connected onto the base plate, and the base plate and the side plate enclose an accommodating cavity. The housing 22 has an opening communicating with the accommodating cavity, and the cover plate 21 can cover the opening to close the accommodating cavity. The positive electrode plate, the negative electrode plate, and the separator may be made into an electrode assembly 23 through winding or lamination. The electrode assembly 23 is packaged in the accommodating cavity. The electrode assembly 23 is infiltrated in the electrolyte. The lithium secondary battery 10 may include one or more electrode assemblies 23, and persons skilled in the art may make choices according to actual requirements.

In some embodiments, the lithium secondary battery 10 may be assembled into a battery module, and the battery module may include one or more lithium secondary batteries 10. The specific quantity may be chosen by persons skilled in the art according to use and capacity of the battery module.

FIG. 3 shows a battery module 300 as an example. Referring to FIG. 3, in the battery module 300, a plurality of lithium secondary batteries 10 may be sequentially arranged in a length direction of the battery module 300. Certainly, the batteries may alternatively be arranged in any other manners. Further, the plurality of lithium secondary batteries 10 may be fixed by fasteners.

Optionally, in an embodiment, the battery module 300 may further include a shell with an accommodating space, and the plurality of lithium secondary batteries 300 are accommodated in the accommodating space.

Optionally, in an embodiment, the battery module 300 may be further assembled into a battery pack, and the battery pack may include one or more battery modules 300. The specific quantity may be chosen by persons skilled in the art according to use and capacity of the battery pack.

FIG. 4 and FIG. 5 show a battery pack 400 as an example. Referring to FIG. 4 and FIG. 5, the battery pack 400 may include a battery box and a plurality of battery modules 300 arranged in the battery box. The battery box includes an upper box body 401 and a lower box body 402. The upper box body 401 can cover the lower box body 402 to form an enclosed space for accommodating the battery modules 300. The plurality of battery modules 300 may be arranged in the battery box in any manner.

The lithium secondary battery 10 described in this application may also be referred to as a lithium battery cell. Optionally, in an embodiment, a plurality of lithium battery cells (cell) are integrated into a battery module (module) first, and then the battery modules are installed in a box of a battery to form a battery pack (pack). In some other production and processing technologies, a plurality of lithium battery cells may alternatively be directly installed in a box to form a battery pack, with an intermediate state of battery module removed, which can reduce mass of the battery pack and increase energy density of the battery pack.

FIG. 6 is a schematic diagram of an electric apparatus 600 provided in this application.

It should be understood that the electric apparatus 600 includes at least one of the lithium secondary battery 10, battery module 300, or battery pack 400 provided in this application. The lithium secondary battery 10, the battery module 300, or the battery pack 400 may be used as a power source of the electric apparatus 600 or an energy storage unit of the electric apparatus 600. The electric apparatus 600 may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The lithium secondary battery 10, the battery module 300, or the battery pack 400 may be selected for the electric apparatus 600 based on requirements for using the electric apparatus 600.

In an example, the electric apparatus 600 is shown in FIG. 6. The electric apparatus 600 is a battery electric vehicle, a hybrid electric vehicle, a plug-in hybrid electric vehicle, or the like. To satisfy requirements of the electric apparatus 600 for high power and high energy density of the lithium secondary battery 10, the battery pack 400 or the battery module 300 may be used.

In another example, the electric apparatus 600 may be a mobile phone, a tablet computer, a notebook computer, or the like. Such apparatus is generally required to be light and thin and may use the lithium secondary battery 10 as its power source.

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

## Examples

### Example 1

(1) Preparation of positive electrode plate

Lithium iron phosphate with $D_v50$ of 10 $\mu m$ was used as a positive electrode active material. The positive electrode active material, a conductive agent acetylene black, and a binder polyvinylidene fluoride (PVDF) were dissolved at a mass ratio of 90:5:5 in a solvent N-methylpyrrolidone (NMP), the mixture was fully stirred and evenly mixed to produce a slurry, and the slurry was uniformly applied onto a positive electrode current collector aluminum foil, followed by drying, cold pressing, and cutting, to obtain a positive electrode plate. A powder compacted density of the positive electrode plate was 2.5 $g/cm^3$.

(2) Preparation of negative electrode plate

Artificial graphite was used as a negative electrode active material. The negative electrode active material, a conductive agent acetylene black, a binder styrene-butadiene rubber (SBR), and a thickener sodium carboxymethyl cellulose (CMC) were dissolved at a mass ratio of 90:4:4:2 in a solvent deionized water, the mixture was evenly mixed to produce a negative electrode slurry, and the slurry was uniformly applied onto a negative electrode current collector copper

foil, followed by drying, cold pressing, and cutting, to obtain a negative electrode plate. A specific surface area of the negative electrode active material in the negative electrode plate was 0.8 $m^2/g$, and a porosity of a negative electrode active material layer in the negative electrode plate was 25%.

(3) Preparation of electrolyte

In an argon atmosphere glove box ($H_2O$ < 0.1 ppm, and $O_2$ < 0.1 ppm), organic solvents ethylene carbonate (EC) and ethyl methyl carbonate (EMC) were evenly mixed at a volume ratio of 3:7, and then a compound represented by formula (I-II), namely, methyl acetate, was added to prepare a solvent. An amount of methyl acetate added was adjusted so that a mass fraction W1 of methyl acetate in the solvent was 60%. The mixture was evenly mixed. Then, a solute lithium hexafluorophosphate ($LiPF_6$) was added and dissolved in the solvent so that a mass fraction of the solute in an electrolyte was 12.5%, and the mixture was fully stirred to obtain the electrolyte.

(4) Assembly of lithium secondary battery

The positive electrode plate, the separator, and the negative electrode plate were sequentially stacked so that the separator was located between the positive electrode plate and the negative electrode plate to separate the positive electrode plate from the negative electrode plate; the resulting stack was wound to obtain an electrode assembly; and the electrode assembly was placed into a housing for drying, and the electrolyte was injected, followed by processes such as formation and standing, to obtain a lithium secondary battery in Example 1.

Example 2

As compared with the lithium secondary battery in Example 1, in Example 2, the porosity P of the negative electrode active material layer in the negative electrode plate was 22%, and the mass fraction W1 of the compound represented by formula (I-II) in the solute was 70%.

Example 3

As compared with the lithium secondary battery in Example 1, in Example 3, the porosity P of the negative electrode active material layer in the negative electrode plate was 22%.

Example 4

As compared with Example 1, in Example 4, the solvent included the compound represented by formula (I-V), where the mass fraction W1 of the compound represented by formula (I-V) in the solvent was 60%.

Example 5

As compared with Example 1, in Example 5, the solvent included the compound represented by formula (I-VIII), where the mass fraction W1 of the compound represented by formula (I-VIII) in the solvent was 60%.

Example 6

As compared with Example 1, in Example 6, the electrolyte included the first additive, and the first additive was the compound represented by formula (II-XI), where the mass fraction W2 of the compound represented by formula (II-XI) in the electrolyte was 0.8%.

Example 7

As compared with Example 1, in Example 7, the electrolyte included the first additive, and the first additive was the compound represented by formula (II-I), where the mass fraction W2 of the compound represented by formula (II-I) in the electrolyte was 0.05%, and the mass fraction W1 of the compound represented by formula (I-II) in the solvent was 70%.

Example 8

As compared with Example 7, in Example 8, the electrolyte included the first additive, and the first additive was the compound represented by formula (II-I), where the mass fraction W2 of the compound represented by formula (II-I) in the

electrolyte was 1.0%, and the mass fraction W1 of the compound represented by formula (I-II) in the solvent was 70%.

Example 9

As compared with Example 1, in Example 9, the electrolyte included the second additive, and the second additive was lithium difluoro(oxalato)borate (LiDFOB), where the mass fraction W3 of the LiDFOB in the electrolyte was 0.05%, and the mass fraction W1 of the compound represented by formula (I-II) in the solvent was 70%.

Example 10

As compared with Example 1, in Example 10, the electrolyte included the second additive, and the second additive was lithium difluorobis(oxalato)phosphate (LiBODFP), where the mass fraction W3 of the LiBODFP in the electrolyte was 0.8%.

Example 11

As compared with Example 2, in Example 11, the electrolyte included the second additive, and the second additive was LiDFOB, where the mass fraction W3 of the LiDFOB in the electrolyte was 1.0%, and the mass fraction W1 of the compound represented by formula (I-II) in the solvent was 70%.

Example 12

As compared with Example 1, in Example 12, the electrolyte included both the first additive and the second additive, the first additive was the compound represented by formula (II-I), and the second additive was LiDFOB, where the mass fraction W2 of the compound represented by formula (II-I) in the electrolyte was 0.5%, and the mass fraction W3 of the LiDFOB in the electrolyte was 0.5%.

Example 13

As compared with Example 1, in Example 13, lithium iron phosphate with $D_v50$ of 10 μm was used as the first positive electrode active material, and lithium iron phosphate with $D_v50$ of 2 μm was used as the second positive electrode active material. The first positive electrode active material, the second positive electrode active material, a conductive agent acetylene black, and a binder polyvinylidene fluoride (PVDF) were dissolved at a mass ratio of 63:27:5:5 in a solvent N-methylpyrrolidone (NMP), the mixture was fully stirred and evenly mixed to produce a slurry, and the slurry was uniformly applied onto a positive electrode current collector aluminum foil, followed by drying, cold pressing, and cutting, to obtain a positive electrode plate. The mass fraction W4 of the second positive electrode active material in the positive electrode active material layer was 30%, and the powder compacted density of the positive electrode plate was 2.65 g/cm$^3$.

Example 14

As compared with Example 13, in Example 14, the mass fraction W4 of the second positive electrode active material in the positive electrode active material layer was 10%, and the powder compacted density of the positive electrode plate was 2.55 g/cm$^3$.

Example 15

As compared with Example 1, in Example 15, artificial graphite with BET of 1.5 m$^2$/g was used as the negative electrode active material.

Example 16

As compared with Example 1, in Example 16, the solvent included the compound represented by formula (I-I) and the compound represented by formula (I-II), to be specific, the solvent included methyl acetate and ethyl acetate. The mass ratio of methyl acetate to ethyl acetate was 30:30.

Comparative Example 1

As compared with Example 1, in Comparative Example 1, dimethyl carbonate (DMC) was used as the solvent.

Comparative Example 2

As compared with Example 1, lithium iron phosphate was used as the positive electrode active material, where the porosity P of the negative electrode active material was 16%, and the mass fraction W1 of the compound represented by formula (I-II) in the solvent was 80%.

For detailed product parameters of the examples and comparative examples, refer to Table 1.

**Table 1: Product parameters of different examples and comparative examples**

| Examples | P (% ) | BET ($m^2/g$ ) | $D_v50$ 1 (μm) | $D_v50$ 2 (μm) | W4 (% ) | Compound | W1 (% ) | Additive 1 | W2 (%) | Additive 2 | W3 (%) |
|---|---|---|---|---|---|---|---|---|---|---|---|
| 1 | 25 | 0.8 | 10 | / | / | I-II | 60 | / | / | / | / |
| 2 | 22 | 0.8 | 10 | / | / | I-II | 70 | / | / | / | / |
| 3 | 22 | 0.8 | 10 | / | / | I-II | 60 | / | / | / | / |
| 4 | 25 | 0.8 | 10 | / | / | I-V | 60 | / | / | / | / |
| 5 | 25 | 0.8 | 10 | / | / | I-VIII | 60 | / | / | / | / |
| 6 | 25 | 0.8 | 10 | / | / | I-II | 60 | II-XI | 0.8 | / | / |
| 7 | 25 | 0.8 | 10 | / | / | I-II | 70 | II-I | 0.0 5 | / | / |
| 8 | 25 | 0.8 | 10 | / | / | I-II | 70 | II-I | 1.0 | / | / |
| 9 | 25 | 0.8 | 10 | / | / | I-II | 70 | / | / | LiDFOB | 0.0 5 |
| 10 | 25 | 0.8 | 10 | / | / | I-II | 60 | / | / | LiBODFP | 0.8 |
| 11 | 25 | 0.8 | 10 | / | / | I-II | 70 | / | / | LiDFOB | 1.0 |
| 12 | 25 | 0.8 | 10 | / | / | I-II | 60 | II-I | 0.5 0 | LiDFOB | 0.5 0 |
| 13 | 25 | 0.8 | 10 | 2 | 30 | I-II | 60 | / | / | / | / |
| 14 | 25 | 0.8 | 10 | 2 | 10 | I-II | 60 | / | / | / | / |
| 15 | 25 | 1.5 | 10 | / | / | I-II | 60 | / | / | / | / |
| 16 | 25 | 0.8 | 10 | / | / | I-II + I-I | 30 + 30 | / | / | / | / |
| Comparative Examples | P (% ) | BET ($m^2/g$ ) | $D_v50$ 1 (μm) | $D_v50$ 2 (μm) | W4 (% ) | Compound | W1 (% ) | Additive 1 | W2 (%) | Additive 2 | W3 (%) |
| 1 | 25 | 0.8 | 10 | / | / | DMC | 60 | / | / | / | / |
| 2 | 16 | 0.8 | 10 | / | / | I-II | 80 | / | / | / | / |

In Table 1, P is the porosity P of the negative electrode active material layer in the negative electrode plate, BET is the specific surface area of the negative electrode active material, $D_v50_1$ is the median particle size by volume of the first positive electrode active material, $D_v50_2$ is the median particle size by volume of the second positive electrode active material, W4 is the mass fraction of the second positive electrode active material in the positive electrode active material layer, the compound is the compound included in the solvent, W1 is the mass fraction of the compound in the solvent, W2 is the mass fraction of the first additive in the electrolyte, W3 is the mass fraction of the second additive in the electrolyte, additive 1 is the first additive, and additive 2 is the second additive.

For detailed battery performance test results of Examples 1 to 16 and Comparative Examples 1 and 2, refer to Table 2.

**Table 2: Battery performance test results of different examples and comparative examples**

| | Battery discharge capacity at 0.5C (Ah) | Fast charging time (min) | Cycles for capacity decay to 80% at 60°C | Volume swelling rate after 30 days of storage at 60°C at 100% SOC (%) |
|---|---|---|---|---|
| Example 1 | 151 | 27 | 1255 | 6.10 |
| Example 2 | 149.7 | 27.1 | 1156 | 8.70 |
| Example 3 | 147.3 | 28 | 1051 | 9.1 |
| Example 4 | 148.1 | 33.1 | 1011 | 9.7 |
| Example 5 | 146.5 | 31.5 | 980 | 10.5 |
| Example 6 | 151.9 | 26.9 | 1341 | 5.6 |
| Example 7 | 152.1 | 26.9 | 1299 | 5.4 |
| Example 8 | 152.7 | 26.9 | 1411 | 4.5 |
| Example 9 | 151.8 | 26.8 | 1321 | 5.7 |
| Example 10 | 151.5 | 26.9 | 1342 | 5.5 |
| Example 11 | 151.9 | 26.8 | 1399 | 4.8 |
| Example 12 | 152.3 | 26.8 | 1471 | 3.9 |
| Example 13 | 153.1 | 26.5 | 1211 | 6.7 |
| Example 14 | 151.9 | 26.8 | 1297 | 6.3 |
| Example 15 | 149.1 | 26.9 | 1105 | 7.2 |
| Example 16 | 151.2 | 27.5 | 1276 | 5.8 |
| Comparative Example 1 | 146.1 | 38.1 | 911 | 15.8 |
| Comparative Example 2 | 147.3 | 30.5 | 1011 | 9.7 |

Next, it can be learned from the comparison between Examples 1, 4, 5, and 16 and Comparative Example 1 that introducing the compounds represented by formula (I-II), formula (I-V), formula (I-VIII), and formula (I-I) into the solvent can effectively improve the infiltration of the electrolyte, so that the lithium secondary batteries in Examples 1, 4, 5, and 16 have better discharge capacity, fast charging capability, and cycle life than that in Comparative Example 1 in which the solvent does not include the compound represented by formula (I), and the lithium secondary batteries in Examples 1, 4, 5, and 16 also have lower volume swelling rate than that in Comparative Example 1, resulting in simultaneously improved safety performance. When the porosity P of the negative electrode active material layer is low, the electrolyte in which the compound represented by formula (I) is introduced into the solvent can rapidly infiltrate the negative electrode active material layer, helping to improve the transport efficiency of lithium ions in the negative electrode active material layer. This improves the cycling performance and safety performance of the lithium secondary battery while increasing the energy density of the lithium secondary battery.

It can be learned from the comparison between Example 1 and Comparative Example 2 that when the compound represented by formula (I-II) is introduced into the solvent, in Example 1, the ratio W1/P of the mass fraction W1 of the compound in the solvent to the porosity P of the negative electrode active material layer is 2.4, and is in the range of 0.65 to 4.4, and further in the range of 1.1 to 3.5. In Comparative Example 2, $W1 \times Ds$ is 5, which exceeds the foregoing range, so the discharge capacity, fast charging capability, and cycle life in Comparative Example 2 are worse than those in Example 1, and the volume swelling rate in Comparative Example 2 is much higher than that in Example 1. This indicates that controlling W1/P within an appropriate range can improve the infiltration of the electrolyte in a case of a low porosity of the negative electrode active material layer, thereby improving the cycling performance and safety performance of the lithium secondary battery while increasing the energy density of the lithium secondary battery.

It can be learned from the comparison between Example 3 and Example 2 that when P is decreased, W1 in Example 2 is increased, while W1 in Example 3 is not increased, so the lithium secondary battery in Example 3 has slightly worse performance than that in Example 2. Therefore, controlling P to be positively correlated with W1 helps to improve the discharge capacity, fast charging capability, cycle life, and safety performance of the lithium secondary battery.

It can be learned from the comparison between Examples 6 and 7 and Example 1 that the compounds represented by formula (II-XI) and formula (II-I) are introduced into the electrolytes in Examples 6 and 7 respectively

as the first additives, so the lithium secondary batteries in Examples 6 and 7 have obviously better cycling performance than that in Example 1, and the lithium secondary batteries in Examples 6 and 7 also have obviously lower volume swelling rate than that in Example 1. This indicates that introducing the first additive into the electrolyte can effectively reduce side reactions of the electrolyte on the surface of the negative electrode active material layer while improving the infiltration of the electrolyte, thereby improving the cycling performance and safety performance of the lithium secondary battery.

It can be learned from the comparison between Examples 8 and 7 and Example 6 that when W1 is increased, W2 in Example 8 is increased, while W2 in Example 7 is decreased, so the lithium secondary battery in Example 8 has better performance than that in Example 7. Therefore, controlling W2 to be positively correlated with W1 helps to further improve the performance of the lithium secondary battery, especially to improve the cycling performance and decrease the volume swelling rate.

It can be learned from the comparison between Examples 9 and 10 and Example 1 that LiDFOB and LiBODFP are introduced into the electrolytes in Examples 9 and 1 respectively as the second additives, so the lithium secondary batteries in Examples 9 and 10 have obviously better cycling performance than that in Example 1, and the lithium secondary batteries in Examples 9 and 10 also have obviously lower volume swelling rate than that in Example 1. This indicates that introducing the first additive into the electrolyte can effectively reduce side reactions of the electrolyte on the surface of the negative electrode active material layer while improving the infiltration of the electrolyte, thereby improving the cycling performance and safety performance of the lithium secondary battery.

It can be learned from the comparison between Examples 9 and 11 and Example 10 that when W1 is increased, W3 in Example 11 is increased, while W3 in Example 9 is decreased, so the lithium secondary battery in Example 11 has better cycling performance and lower volume swelling rate than that in Example 9. Therefore, controlling W3 to be positively correlated with W1 helps to further improve the cycling performance and safety performance of the lithium secondary battery.

It can be learned from the comparison between Example 12 and Examples 6 and 10 that both the first additive and the second additive are introduced into the electrolyte in Example 12, so the lithium secondary battery in Example 12 has significantly improved cycling performance and significantly decreased volume swelling rate. Therefore, it can be learned that the first additive and the second additive generate a synergistic effect in the electrolyte, which can further improve the cycling performance and safety performance of the lithium secondary battery.

It can be learned from the comparison between Example 13 and Example 1 that the second positive electrode active material with relatively small $D_v50_2$ is introduced into the positive electrode active material layer in Example 13, which increases the powder compacted density of the positive electrode plate. The lithium secondary battery in Example 13 has increased discharge capacity than that in Example 1. This indicates that combining the positive electrode active materials with different particle sizes helps to increase the powder compacted density of the positive electrode active material layer, thereby helping to increase the discharge capacity of the lithium secondary battery.

It can be learned from the comparison between Example 14 and Example 13 that in Example 14, the mass fraction W4 of the second positive electrode active material with relatively small $D_v50_2$ in the positive electrode active material layer is decreased, so the powder compacted density of the positive electrode plate is decreased, and the discharge capacity of the lithium secondary battery is also decreased. This indicates that controlling the mass fraction W4 of the second positive electrode active material with a relatively small median particle size by volume in the positive electrode active material layer can affect the powder compacted density of the positive electrode plate, thereby affecting the energy density of the lithium secondary battery, and in turn affecting the discharge capacity of the lithium secondary battery.

It should be understood that the median particle size by volume and specific surface area of a material are physical quantities correlated with each other. A material with a larger median particle size by volume typically has a smaller BET, while a material with a smaller median particle size by volume typically has a larger BET.

It can be learned from the comparison between Example 15 and Example 1 that the negative electrode active material in Example 15 has a larger BET, so the lithium secondary battery in Example 1 has better discharge capacity, fast charging performance, and cycling performance than that in Example 15, and the lithium secondary battery in Example 1 has lower volume swelling rate. Therefore, it can be learned that the median particle size by volume or specific surface area of the negative electrode active material affects the performance of the lithium secondary battery, and a negative electrode active material with a relatively large median particle size by volume and a relatively small BET has smaller contact area with the electrolyte, which can reduce the probability of side reactions of the electrolyte on the surface of the negative electrode active material layer, thereby helping to improve the performance of the lithium secondary battery.

The test methods of the physical parameters and performance parameters mentioned in the examples of this application are briefly described.

1. Calculation method of porosity of negative electrode active material layer

The porosity of the negative electrode active material layer can be calculated according to the following formula:

$$P = \frac{\rho_1 - \rho_2}{\rho_1}$$

where $\rho_1$ is the powder density of the negative electrode active material at normal pressure, and $\rho_2$ is the powder compacted density of the negative electrode active material at a pressure of 30 KN.

2. Test method of powder compacted density

The powder compacted density of the negative electrode active material has a meaning well known in the art and can be measured by using an instrument and a method known in the art. For example, it can be measured in accordance with the standard GB/T 24533-2009 by using an electronic pressure testing machine (for example, model UTM7305). An example test method is as follows: 1 g of negative electrode active material was weighed, added to a mold with a bottom area of 1.327 $cm^2$, pressurized to 3000 kg (equivalent to 30 KN), with the pressure held for 30s and then released, and held for 10s. Then, the powder compacted density of the negative electrode active material at a pressure of 30 KN was recorded and calculated.

3. Test method of median particle size (by volume)

$D_v50$ represents a corresponding particle size of the negative electrode active material when a cumulative volume distribution percentage reaches 50%. In this application, $D_v50$ has a meaning well known in the art and can be measured by using an instrument and a method known in the art. For example, it can be measured in accordance with GB/T 19077-2016 particle size distribution laser diffraction method by using a laser particle size analyzer (for example, Master Size 300).

4. Test method of BET

For the test method, refer to the standard GB/T 19587-2004 "Determination of the specific surface area of solids by gas adsorption using the BET method".

8 g - 15 g of the sample under test was taken and put into a sample tube, and an initial quality of the sample under test was recorded. The weighed sample under test was put into the device NOVA2000e. Then, degassing was started, and the sample under test was heated to 200°C and held for 2 h. The quality of the sample under test after degassing was recorded. Then, the sample under test after degassing was put into the device again, and liquid nitrogen was added for the BET test. The nitrogen pressure was set to 0.08 MPa - 0.12 MPa and the heating temperature was set to 40°C - 350°C. After the test was completed, the specific surface area was read from the test results.

5. Battery cell capacity test

At 25°C, the lithium secondary battery was charged to 3.65 V at a constant current of 0.5C, then charged to a current less than 0.05C at a constant voltage of 3.65 V, and discharged to 2.5 V at a constant current of 0.5C, to obtain a discharge capacity at 0.5C.

6. Fast charging time

At 25°C, the lithium secondary battery was charged to a 10% state of charge (SOC) at 0.33C, charged to 80% SOC for s minutes according to the given fast charging steps, left standing for 30 minutes, then discharged at 1C, and left standing for 30 minutes. After 20 cycles, the battery cell was disassembled after the battery was fully charged, and whether lithium precipitation occurred at the negative electrode was observed. If no lithium precipitation occurred, it indicated that the battery cell had the fast charging capability of s minutes.

7. Test method of cycling performance

At 60°C, the lithium secondary battery was charged to 3.65 V at a constant current of 0.5C, then charged to a current less than 0.05C at a constant voltage of 3.65 V, and discharged to 2.5 V at a constant current of 0.5C. This was one charge and discharge cycle. Such charge and discharge cycle was repeated, and the number of cycles when the capacity of the lithium secondary battery decayed to 80% was calculated.

8. Volume swelling rate test

At 25°C, the prepared lithium secondary battery was first charged to 3.65 V at a constant current of 0.33C, then charged to a current of 0.05C at a constant voltage of 3.65 V, and discharged to 2.5 V at a constant current of 0.33C. A discharge capacity at that point was the discharge capacity of the lithium secondary battery before high-temperature storage. Then, the lithium secondary battery was charged to 3.65 V at a constant current of 0.33C, and charged to a current of 0.05C at a constant voltage of 3.65 V to fully charge the lithium secondary battery. The volume of the battery was measured by using the drainage method. Then, the lithium secondary battery was stored at 60°C for 60 days. After the storage was finished, the lithium secondary battery was placed at 25°C, and the volume of the battery was measured by using the drainage method. Volume swelling rate of the battery = (volume after storage/volume before storage - 1)%

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A lithium secondary battery, wherein the lithium secondary battery comprises:

   a negative electrode plate, wherein the negative electrode plate comprises a negative electrode current collector and a negative electrode active material layer disposed on at least one side of the negative electrode current collector, and a porosity of the negative electrode active material layer is P; and

   an electrolyte, wherein the electrolyte comprises a solvent, the solvent comprises at least one of compounds represented by the following formula (I), and a mass fraction of the compound represented by formula (I) in the solvent is W1, the mass fraction W1 of the compound represented by formula (I) and the porosity P of the negative electrode active material layer satisfying $0.65 \leq W1/P \leq 4.4$, and optionally $1.1 \leq W1/P \leq 3.5$;

   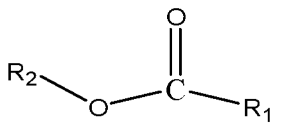

   (I)

   wherein $R_1$ and $R_2$ each independently comprise at least one of an alkyl group having 1 to 3 carbon atoms and a halogenated alkyl group having 1 to 3 carbon atoms.

2. The lithium secondary battery according to claim 1, wherein $R_1$ and $R_2$ each independently comprise at least one of methyl group, ethyl group, propyl group, fluoromethyl group, fluoroethyl group, and fluoropropyl group.

3. The lithium secondary battery according to claim 1 or 2, wherein the porosity P of the negative electrode active material layer satisfies $18\% \leq P \leq 30.5\%$, and optionally $20\% \leq P \leq 27\%$.

4. The lithium secondary battery according to any one of claims 1 to 3, wherein the mass fraction W1 of the compound represented by formula (I) satisfies $20\% \leq W1 \leq 80\%$, and optionally $30\% \leq W1 \leq 70\%$.

5. The lithium secondary battery according to any one of claims 1 to 4, wherein the compound represented by formula (I) comprises at least one of the following compounds:

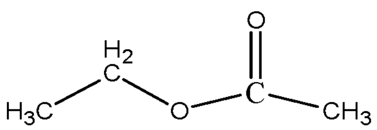

(I-I),

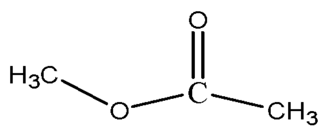

(I-II),

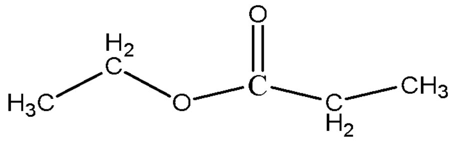

(I-III),

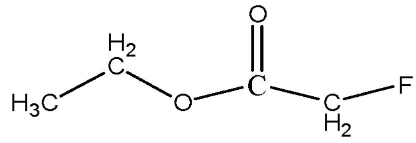

(I-IV),

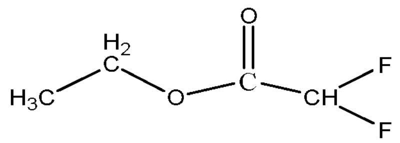

(I-V),

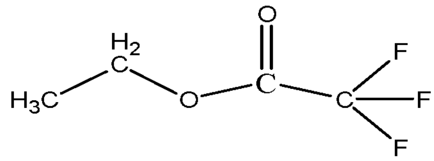

(I-VI),

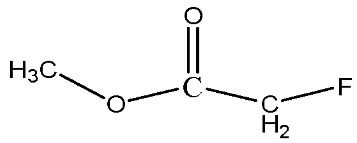

(I-VII),

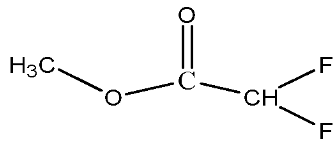

(I-VIII),

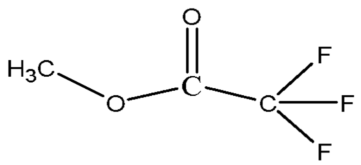

(I-IX),

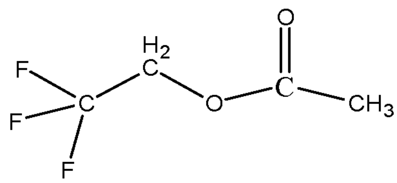

(I-X), and

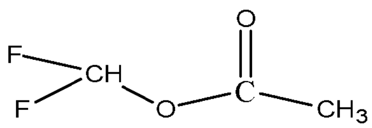

(I-XI); and

optionally, the compound represented by formula (I) comprises at least one of the compound represented by formula (I-I), the compound represented by formula (I-II), the compound represented by formula (I-V), and the compound represented by formula (I-VIII).

**6.** The lithium secondary battery according to any one of claims 1 to 5, wherein the electrolyte comprises a first additive, and the first additive comprises at least one of a compound represented by formula (II) and a compound represented by formula (III):

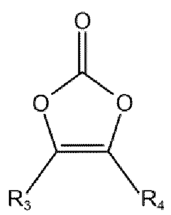

(II), and

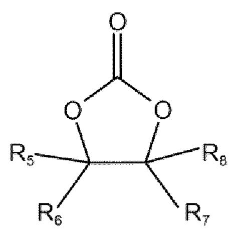

(III),

wherein $R_3$ and $R_4$ each independently comprise a hydrogen atom, a halogen atom, an alkyl group having 1 to 6 carbon atoms, a halogenated alkyl group having 1 to 6 carbon atoms, an alkoxy group having 1 to 6 carbon atoms, an alkenyl group having 2 to 6 carbon atoms, and an alkynyl group having 2 to 6 carbon atoms; and

$R_5$, $R_6$, $R_7$, and $R_8$ each independently comprise a hydrogen atom, a halogen atom, an alkyl group having 1 to 6 carbon atoms, a halogenated alkyl group having 1 to 6 carbon atoms, an alkoxy group having 1 to 6 carbon atoms, an alkenyl group having 2 to 6 carbon atoms, and an alkynyl group having 2 to 6 carbon atoms, not all of $R_5$, $R_6$, $R_7$, and $R_8$ being hydrogen atoms.

**7.** The lithium secondary battery according to claim 6, wherein

$R_3$ and $R_4$ each independently comprise a hydrogen atom, a halogen atom, an alkyl group having 1 to 4 carbon atoms, a halogenated alkyl group having 1 to 4 carbon atoms, an alkoxy group having 1 to 4 carbon atoms, an alkenyl group having 2 to 4 carbon atoms, and an alkynyl group having 2 to 4 carbon atoms; and

$R_5$, $R_6$, $R_7$, and $R_8$ each independently comprise a hydrogen atom, a halogen atom, an alkyl group having 1 to 4 carbon atoms, a halogenated alkyl group having 1 to 4 carbon atoms, an alkoxy group having 1 to 4 carbon atoms, an alkenyl group having 2 to 4 carbon atoms, and an alkynyl group having 2 to 4 carbon atoms, not all of $R_5$, $R_6$, $R_7$, and $R_8$ being hydrogen atoms.

**8.** The lithium secondary battery according to claim 6 or 7, wherein a mass fraction of the first additive in the electrolyte is W2, W2, W1, and P satisfying $0.00006 \leq W2 \times W1/P \leq 0.88$, optionally $0.0006 \leq W2 \times W1/P \leq 0.44$, and optionally $0.0013 \leq W2 \times W1/P \leq 0.22$.

**9.** The lithium secondary battery according to claim 8, wherein $0.01\% \leq W2 \leq 20\%$, optionally $0.1\% \leq W2 \leq 10\%$, and optionally $0.2\% \leq W2 \leq 5\%$.

**10.** The lithium secondary battery according to any one of claims 6 to 9, wherein the first additive comprises at least one of the following compounds:

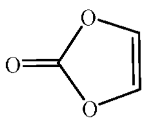
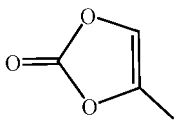
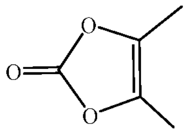
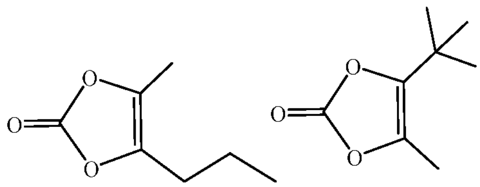

(II-I), (II-II), (II-III), (II-IV), (II-V),

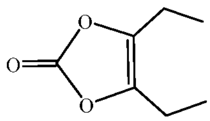
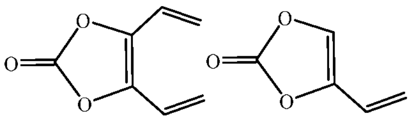
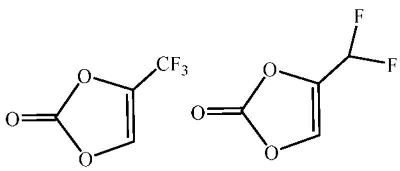

(II-VI), (II-VII), (II-VIII), (II-IX), (II-X),

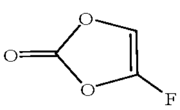
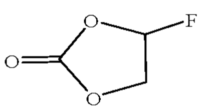
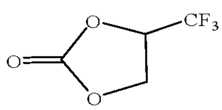
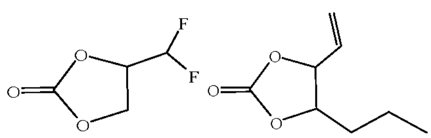

(II-XI), (III-I), (III-II), (III-III), (III-IV),

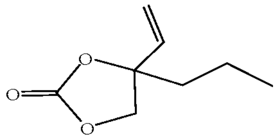 (III-V), 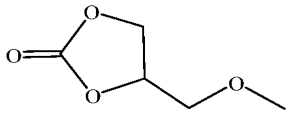 (III-VI), 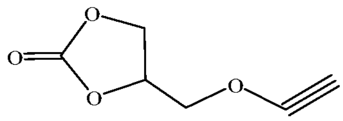 (III-VII),

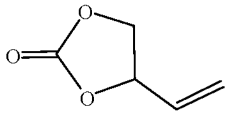 (III-VIII), 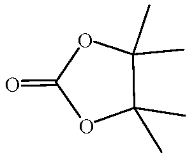 (III-IX), and 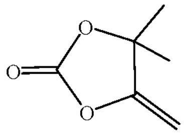 (III-X).

**11.** The lithium secondary battery according to any one of claims 1 to 10, wherein the electrolyte comprises a second additive, and the second additive comprises at least one of $M^{a+}[F_wPO_t]^{b-}$, $M^{a+}[BF_4]^{b-}$, $M^{a+}[FSO_3]^{b-}$, and a compound represented by formula (IV):

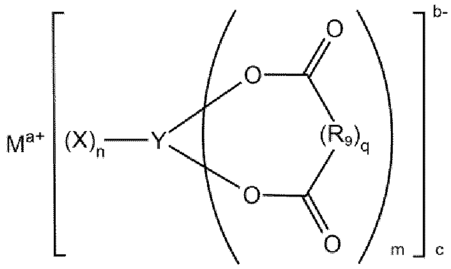

(IV),

wherein $M^{a+}$ comprises at least one of a lithium ion, a sodium ion, a potassium ion, a rubidium ion, a cesium ion, a magnesium ion, a calcium ion, a barium ion, an aluminum ion, an iron ion, a copper ion, a nickel ion, and an organic cation, and a, b, and c all represent natural numbers;
t represents an integer from 0 to 3, and w represents an integer from 1 to 6;
X comprises at least one of halogen atoms, and n represents an integer from 0 to 4;
Y comprises at least one of a boron atom and a phosphorus atom; and
$R_9$ comprises a substituted or unsubstituted alkylene group having 1 to 10 carbon atoms, a substituted or unsubstituted halogenated alkylene group having 1 to 10 carbon atoms, a substituted or unsubstituted arylene group having 6 to 20 carbon atoms, and a substituted or unsubstituted halogenated arylene group having 6 to 20 carbon atoms, q represents an integer of 0 or 1, and m represents an integer from 1 to 3.

**12.** The lithium secondary battery according to claim 11, wherein a mass fraction of the second additive in the electrolyte is W3, W3, W1, and P satisfying $0.00006 \leq W3 \times W1/P \leq 0.88$, optionally $0.0006 \leq W3 \times W1/P \leq 0.44$, and optionally $0.0013 \leq W3 \times W1/P \leq 0.22$.

**13.** The lithium secondary battery according to claim 12, wherein $0.01\% \leq W3 \leq 20\%$, optionally $0.1\% \leq W3 \leq 10\%$, and optionally $0.2\% \leq W3 \leq 5\%$.

**14.** The lithium secondary battery according to any one of claims 11 to 13, wherein in $M^{a+}[FSO_3]^{b-}$, $M^{a+}$ comprises at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, and $Ni^{3+}$.

**15.** The lithium secondary battery according to any one of claims 1 to 14, wherein the negative electrode active material layer comprises a negative electrode active material, and a median particle size $D_v50_0$ of the negative electrode active material satisfies $6\ \mu m \leq D_v50_0$, and preferably $15\ \mu m \leq D_v50_0 \leq 20\ \mu m$.

**16.** The lithium secondary battery according to claim 15, wherein a specific surface area of the negative electrode active material satisfies 0.5 $m^2/g \leq BET \leq 2.0\ m^2/g$, and optionally 0.8 $m^2/g \leq BET \leq 1.5\ m^2/g$.

**17.** The lithium secondary battery according to any one of claims 1 to 16, wherein the lithium secondary battery comprises:

a positive electrode plate, wherein the positive electrode plate comprises a positive electrode current collector and a positive electrode active material layer disposed on the positive electrode current collector, and the positive electrode active material layer comprises a first positive electrode active material and a second positive electrode active material; wherein
a median particle size $D_v50_1$ of the first positive electrode active material satisfies 8 $\mu m \leq D_v50_1 \leq 50\ \mu m$; and a median particle size $D_v50_2$ of the second positive electrode active material satisfies 0.02 $\mu m \leq D_v50_2 \leq 8\ \mu m$.

**18.** The lithium secondary battery according to claim 17, wherein a mass fraction W4 of the second positive electrode active material in the positive electrode active material layer satisfies $0\% \leq W4 \leq 60\%$, and optionally $20\% \leq W4 \leq 40\%$.

**19.** An electric apparatus, wherein the electric apparatus comprises the lithium secondary battery according to any one of claims 1 to 18.

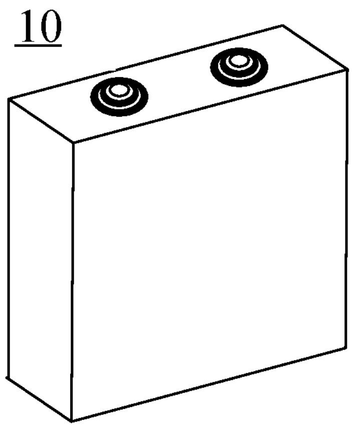


FIG. 1

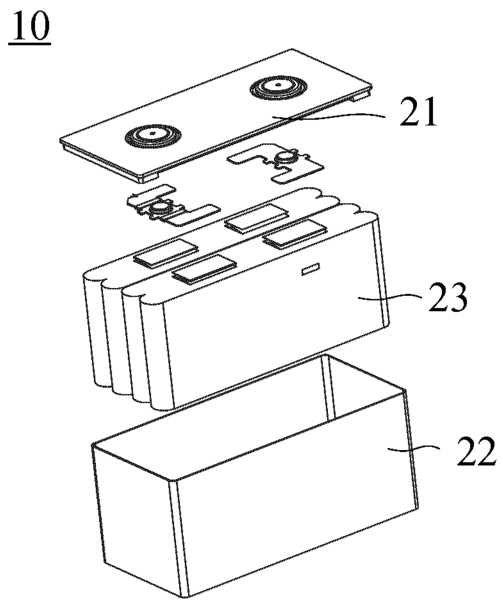


FIG. 2

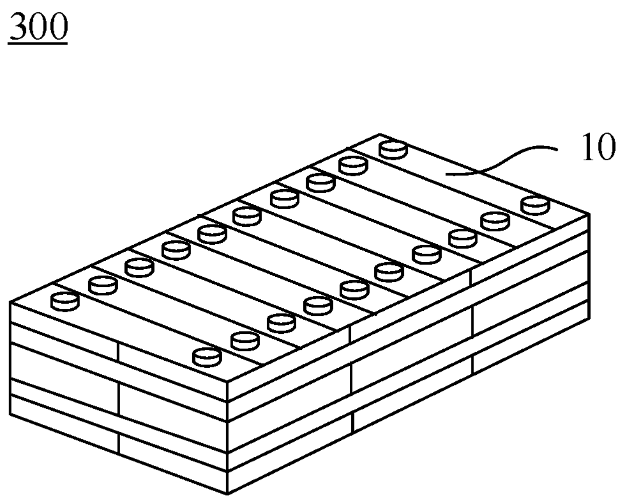


FIG. 3

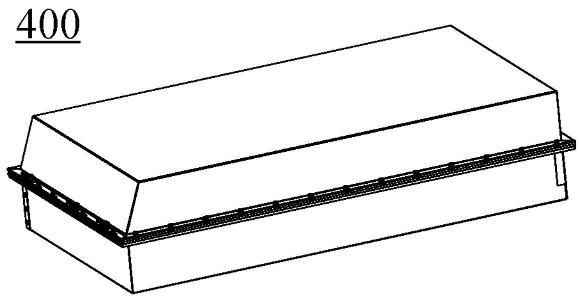


FIG. 4

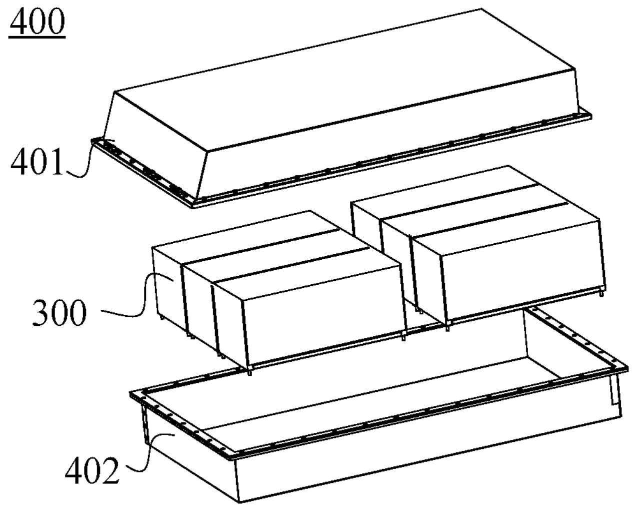


FIG. 5

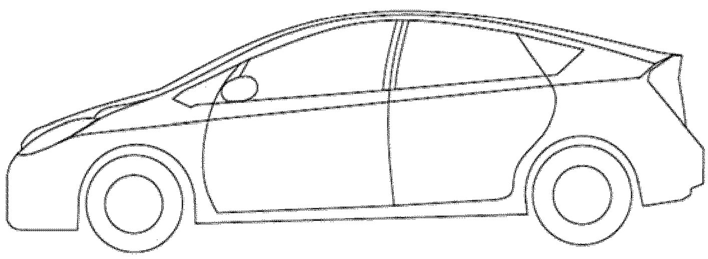

FIG. 6

**INTERNATIONAL SEARCH REPORT**

International application No. **PCT/CN2023/076518**

**A. CLASSIFICATION OF SUBJECT MATTER**

H01M10/0569(2010.01)i

According to International Patent Classification (IPC) or to both national classification and IPC

**B. FIELDS SEARCHED**

Minimum documentation searched (classification system followed by classification symbols)

IPC: H01M10

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 电解液, 电解质, 负极, 负电极, 溶剂, 添加剂, 质量分数, 孔隙率, electrolyte, anode, solvent, additive, mass fraction, porosity

**C. DOCUMENTS CONSIDERED TO BE RELEVANT**

| Category* | Citation of document, with indication, where appropriate, of the relevant passages | Relevant to claim No. |
|---|---|---|
| X | CN 115483433 A (XIAMEN HAICHEN ENERGY STORAGE TECHNOLOGY CO., LTD.) 16 December 2022 (2022-12-16) description, paragraphs 39-87 and 121 | 1-19 |
| Y | WO 2023004819 A1 (CONTEMPORARY AMPEREX TECHNOLOGY CO., LTD.) 02 February 2023 (2023-02-02) claims 1-19 | 1-19 |
| Y | CN 106602131 A (NINGDE AMPEREX TECHNOLOGY LTD.) 26 April 2017 (2017-04-26) claims 1-10 | 1-19 |
| Y | CN 106898728 A (BYD CO., LTD.) 27 June 2017 (2017-06-27) claims 1 and 10 | 1-19 |
| Y | CN 113454815 A (NINGDE AMPEREX TECHNOLOGY LTD.) 28 September 2021 (2021-09-28) description, paragraphs 144-147 | 1-19 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 October 2023** | **30 October 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/076518**

| Patent document cited in search report | | | Publication date (day/month/year) | Patent family member(s) | | | Publication date (day/month/year) |
|---|---|---|---|---|---|---|---|
| CN | 115483433 | A | 16 December 2022 | | None | | |
| WO | 2023004819 | A1 | 02 February 2023 | JP | 2023538720 | A | 11 September 2023 |
| | | | | KR | 20230021096 | A | 13 February 2023 |
| CN | 106602131 | A | 26 April 2017 | CN | 111416145 | A | 14 July 2020 |
| | | | | CN | 111416145 | B | 25 February 2022 |
| CN | 106898728 | A | 27 June 2017 | | None | | |
| CN | 113454815 | A | 28 September 2021 | WO | 2022061531 | A1 | 31 March 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 245332009 T
- GB 190772016 T
- GB 195872004 T